# EUROPÄISCHE PATENTANMELDUNG

(11) **EP 1 585 212 A1**
(43) Veröffentlichungstag der Anmeldung: **12.10.2005**
(21) Anmeldenummer: 04008600.1
(22) Anmeldetag: 08.04.2004
(51) Int. Cl.: H02K 9/00, H02K 3/24

(54) **Rotierende elektrische Maschine**

(71) Anmelder: SIEMENS AKTIENGESELLSCHAFT, 80333 München (DE)
(72) Erfinder: Kowalski, Waldemar, 45472 Mülheim (DE); Weidner, Jürgen R., 45277 Essen (DE)

(57) **Zusammenfassung**

Die vorliegende Erfindung betrifft eine rotierende elektrische Maschine, mit einem drehfesten angeordneten Ständer (1) und einem drehbar gelagerten Läufer, wobei der Ständer (1) und/oder der Läufer wenigstens eine aus Stäben (2, 3) eines elektrisch leitfähigen Werkstoffs gebildete Wicklung aufweist, wobei die Stäbe (2, 3) einen Kanal (4) für ein gasförmiges Kühlmittel aufweisen und wenigstens an einem Ende der Stäbe (2, 3) jeweils eine Umlenkkappe für das aus dem Kanal (4) austretende Kühlmittel vorgesehen ist, wobei jede Umlenkkappe einen Temperatursensor (6) aufweist.

## Beschreibung

Die vorliegende Erfindung betrifft eine rotierende elektrische Maschine, mit einem drehfesten angeordneten Ständer und einem drehbar gelagerten Läufer, wobei der Ständer und/oder der Läufer wenigstens eine aus Stäben eines elektrisch leitfähigen Werkstoffs gebildete Wicklung aufweist, wobei die Stäbe einen Kanal für ein gasförmiges Kühlmittel aufweisen und wenigstens an einem Ende der Stäbe jeweils eine Umlenkkappe für das aus dem Kanal austretende Kühlmittel vorgesehen ist.

Bei der Umwandlung von elektrischer in mechanischer Energie entsteht beispielsweise durch Strom-, Ummagnetisierungs- und Reibungsverluste Verlustwärme, die zur Begrenzung der Temperatur der Wicklungen und ihrer Isolierung durch ein Kühlsystem abgeführt werden müssen. Die Verlustwärme der Wicklung und des aktiven Blechpakets wird durch Wärmeleitung den Oberflächen der Blechpakete, der Wickelköpfe, der Polradspuren und anderen Kühlflächen zugeführt, von denen sie an das Kühlmittel übergeht und überführt wird. Maschinen höherer Leistung werden in der Regel mit einem künstlich bewegten Kühlmittel gekühlt. Sie benötigen eine intensivere Kühlung als kleine Maschinen. Die einzelnen Maschinenteile, Läuferwicklung mit Wickelkopf und Aktivteil, Ständerwicklung und Blechpaket werden je nach Leistung mit Luft, Wasserstoff, Wasser, Öl oder dergleichen im geschlossenen Kreislauf gekühlt.

Bei den gasförmigen Kühlmitteln erweist sich insbesondere Wasserstoff als besonders wirksam im Vergleich zu Luft, so dass dieses Kühlmittel bei den hohen Anforderungen im Großmaschinenbereich bevorzugt wird. Obwohl Wasser als Kühlmittel außerordentlich effizient zur Kühlung verwendet werden könnte, ist der Einsatz bei großen elektrischen Maschinen jedoch sehr aufwändig, da aufgrund der entsprechend großen elektrischen und elektromagnetischen Felder entionisiertes Wasser mit einer besonders geringen elektrischen Leitfähigkeit verwendet werden muss. Ansonsten besteht die Gefahr der Zersetzung und der Korrosion mit dem entsprechenden Gefahrenpotential. Auch der Einsatz von Öl ist daher gegenüber dem Einsatz eines gasförmigen Kühlmittels nachteilig. Im Großmaschinenbereich wird daher häufig Wasserstoff als Kühlmittel verwendet.

Der drehfest angeordnete Ständer der elektrischen Maschine umfasst neben einem Blechpaket auch eine Wicklung. Das Blechpaket kann zugleich auch ein Gehäuse der elektrischen Maschine bilden. Im Großmaschinenbereich sind die Wicklungen oftmals als Stabwicklungen ausgebildet, deren Spulen nicht in einem Zug aus Draht oder Band gewickelt, sondern zusammengesetzt sind. So kann eine Windung beispielsweise aus zwei Stäben und zwei Bügeln gebildet sein oder aus zwei Elementen, die je einen Stab und, an dessen Enden angeordnet, zwei halbe Bügel umfassen. Die Verbindung erfolgt in der Regel durch Löten oder auch durch mechanische Verbindungselemente.

Bei gasgekühlten elektrischen Maschinen ist im Bereich des Wicklungskopfes eine Gasumlenkkappe vorgesehen, die zur Herstellung eines geschlossenen Kühlmittelsystems dient und das Gas in einer gewünschten Weise führt. Bisher ist es üblich, an einigen exponierten Stellen eine Warmgasmischtemperatur, resultierend aus den Kühlmittelströmen zweier Generatorstäbe, an einigen exponierten Stellen zu ermitteln. Gerade im Großmaschinenbereich erweist es sich jedoch als nachteilig, dass Generatorschäden, sofern sie nicht an den exponierten Messstellen auftreten, erst recht spät erkannt werden, wodurch ein hoher Reparaturaufwand sowie eine entsprechend große Standzeit erforderlich wird.

Es ist daher die **Aufgabe** der vorliegenden Erfindung, eine gattungsgemäße elektrische Maschine derart weiterzubilden, dass die oben beschriebenen Nachteile verringert werden.

Als **Lösung** wird mit der vorliegenden Erfindung eine gattungsgemäße rotierende elektrische Maschine vorgeschlagen, wobei jede Umlenkkappe einen Temperatursensor aufweist.

Erstmals ist somit möglich, die lokale Temperatur an einer Vielzahl von Stellen zu erfassen und somit eine bessere und effizientere Überwachung des Ständers der rotierenden elektrischen Maschine zu erreichen. Beschädigungen der elektrischen Maschine, die zu einer Erhöhung der Kühlmitteltemperatur führen, können frühzeitig erkannt werden. Eine Erhöhung der Betriebssicherheit der elektrischen Maschine kann erreicht werden. Darüber hinaus besteht die Möglichkeit, den Ständer der elektrischen Maschine besser thermisch auszulasten. So kann ein hoher Wirkungsgrad erreicht werden. Bereits vorhandene elektrische Maschinen können einfach nachgerüstet werden, indem die Umlenkkappen mit entsprechenden Temperatursensoren ausgerüstet werden. Als gasförmiges Kühlmittel können beliebige geeignete Gase oder Gasgemische verwendet werden, wie beispielsweise Luft oder Wasserstoff. Die Stäbe sind vorzugsweise aus einem elektrisch leitfähigen Werkstoff wie Kupfer, Aluminium oder dergleichen gebildet. Sie können einen Kanal in Form einer im eingebauten Zustand verschlossenen Nut oder auch einen innerhalb des Stabs in dessen Erstreckungsrichtung vorgesehenen Kanal aufweisen. An einem Ende des Stabes wird das Kühlmittel zugeführt, welches den Kanal durchströmt und am gegenüberliegenden Ende ausströmt. Die Umlenkkappe kann gasdicht mit dem Kanal verbunden sein. Besonders vorteilhaft erweist sich die Erfindung bei einer am warmgasseitigen Ende der Stäbe angeordneten Umlenkkappe.

Es wird ferner vorgeschlagen, dass die Wicklung mehrlagig ausgebildet ist und für jede Lage der Wicklung ein separater Temperatursensor vorgesehen ist. So kann vorteilhaft die Temperatur des Kühlmittels für jede Lage separat ermittelt werden. Eine größere Genauigkeit der Erfassung der lokalen Temperatur und damit auch der Fehlererkennung kann erreicht werden.

In einer weiteren Ausgestaltung wird vorgeschlagen, dass ein geschlossener Kühlmittelkreislauf vorgesehen ist. So kann vorteilhaft ein Kühlmittel verwendet werden, welches von der die elektrische Maschine umgebenden Atmosphäre abweicht. Durch den Kreislauf kann eine kontinuierliche Kühlmittelquelle eingespart werden. Gleichwohl durchströmt vorzugsweise das aus dem Kanal austretende Kühlmittel einen Kühler, so dass das Kühlmittel mit reduzierter Temperatur für einen erneuten Kühlzyklus zur Verfügung steht.

In einer weiteren Ausgestaltung wird vorgeschlagen, dass der Temperatursensor ein Thermoelement ist. Vorteilhaft weist das Thermoelement eine geringe Wärmekapazität auf, so dass es einer Temperaturänderung des Kühlmittels schnell folgen kann. Das Thermoelement kann ferner vorzugsweise aus einer Werkstoffkombination gebildet sein, die gegenüber dem verwendeten Kühlmittel inert ist. Durch geeignete schaltungstechnische Maßnahmen, wie beispielsweise Verdrillen der Zuleitungen und dergleichen, kann erreicht werden, dass Störeinflüsse auf das Messsignal reduziert werden.

Daneben wird vorgeschlagen, dass der Temperatursensor ein optischer Temperatursensor ist. So kann der optische Temperatursensor beispielsweise durch eine optische Glasfaser gebildet sein, deren Eigenschaften sich in Abhängigkeit der Temperatur verändern und die mit einer entsprechenden Auswerteeinheit in Kommunikationsverbindung steht. Darüber hinaus kann es vorgesehen sein, dass die gemessenen Temperaturdaten an eine Zentrale übermittelt werden, die den Betrieb der elektrischen Maschine überwacht. Dies ist insbesondere im Kraftwerksbereich von Vorteil, und zwar wenn elektrische Generatoren bedarfsgerecht ferngesteuert werden. So können vorteilhaft bereits geringe Temperaturabweichungen von der Solltemperatur ermittelt und Gegenmaßnahmen eingeleitet werden. Beispielsweise kann bei einem außerordentlichen Temperaturanstieg ein Herunterfahren des entsprechenden Kraftwerks ferngesteuert veranlasst werden, wobei zugleich ein anderes Kraftwerk in seiner Leistung entsprechend hochgefahren wird, um eine kontinuierliche Energieversorgung sicherzustellen. Eine Überlastung der Energieversorgung aufgrund eines unerwarteten Ausfalls eines Generators kann vermieden werden.

Weitere Vorteile und Merkmale sind der folgenden Beschreibung eines Ausführungsbeispiels zu entnehmen. Im wesentlichen gleichbleibende Bauteile sind mit den gleichen Bezugszeichen bezeichnet.

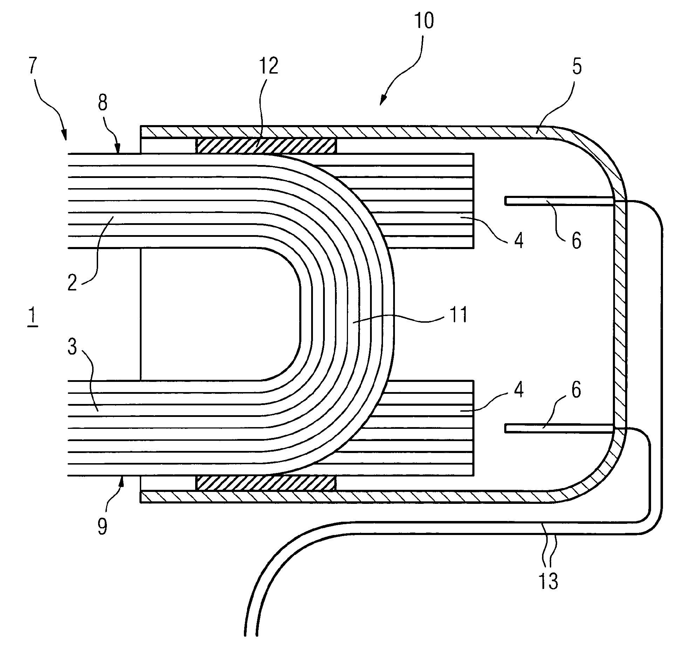

Es zeigt die einzige Figur einen Schnitt durch einen Bereich eines Wicklungskopfes eines elektrischen Generators mit einer Gasumlenkkappe mit Temperatursensoren.

Die einzige Figur zeigt in Schnittdarstellung einen Ausschnitt aus einem Wicklungskopf 10 eines nicht weiter dargestellten Turbogenerators, der Teil eines drehfest angeordneten Ständers 1 ist. Der Ständer 1 weist eine aus Kupferstäben 2, 3 gebildete Wicklung 7 auf, deren Enden mittels Bügel 11 elektrisch leitend verbunden sind. An den Stäben 2, 3 sind Kanäle 4 ausgebildet, durch die gasförmiger Wasserstoff als Kühlmittel strömt. Die elektrische Maschine ist mit einem geschlossenen Kühlmittelkreislauf versehen, so dass der aus den Kanälen 4 austretende, erwärmte Wasserstoff einem nicht näher dargestellten Kühler zugeführt wird, in dem ihm die Wärme entzogen wird. Anschließend wird der Wasserstoff wieder zur Kühlung den Kanälen 4 zugeführt. Dazu sind ebenfalls nicht dargestellte Fördermittel vorgesehen, beispielsweise eine Gaspumpe oder ein Gebläse. Im Bereich des Gasaustritts aus den Kanälen 4 ist eine Gasumlenkkappe 5 vorgesehen, an der jeweils dem Kanalaustritt 4 gegenüberliegend ein optischer Temperatursensor 6 angeordnet ist. Jeder Temperatursensor 6 ist über eine Messleitung 13 mit einer nicht näher dargestellten Auswerteeinheit verbunden, mittels der die Gastemperatur am Temperatursensor 6 ermittelt werden kann.

Zwischen der Wicklung 7 und der Gasumlenkkappe 5 ist ein Dichtungselement 12 vorgesehen, um sicherzustellen, dass das aus den Kanälen 4 austretende Gas in de gewünschte Richtung zum Kühler strömt.

Die Temperatursensoren 6 sind derart angeordnet, dass sie im wesentlichen der Austrittstemperatur des Wasserstoffs aus den Kanälen 4 folgen. Somit kann für jeden einzelnen Stab 2, 3 eine Temperatur ermittelt werden. Tritt nun im Bereich eines Stabs 2, 3 eine Beschädigung auf, die zu einer erhöhten Temperatur gegenüber der des bestimmungsgemäßen Betriebs liegt, so führt dies ebenfalls zu einer Erhöhung der Temperatur des Wasserstoffs, welche mittels des zugeordneten Temperatursensors 6 ermittelt werden kann. Es kann demnach die Position der Beschädigung erheblich genauer angegeben werden, so dass im Reparaturfall die Suche nach der Beschädigung deutlich eingegrenzt werden kann. Gerade bei Großmaschinen, deren Wartung mit erheblichem Montageaufwand verbunden ist, ist dies ein wichtiger Vorteil, der zur Reduzierung der Kosten beitragen kann. Ferner kann beispielsweise vorgesehen sein, dass die Auswerteeinheit bei Überschreiten eines Schwellwerts für die ermittelte Temperatur eines Temperatursensors 6 eine Meldung an eine Zentrale erfolgt, so dass entsprechende Maßnahmen eingeleitet werden können, um größere Schäden am Turbogenerator zu vermeiden. Dies ermöglicht eine Früherkennung, da jede einzelne Stabtemperatur überwacht werden kann. Darüber hinaus kann der Generatorständer 1 besser thermisch ausgenutzt werden, da lokale Überhitzungen des Generatorständers 1 rasch erkannt werden können. Auch kann der Wirkungsgrad des Turbogenerators weiter erhöht werden.

Die vorliegende Erfindung eignet sich darüber hinaus gut zur Nachrüstung bei bereits bestehenden elektrischen Maschinen, so dass mit einem geringen Kostenaufwand die Vorteile, die mit der Erfindung erreicht werden können, auch bereits bestehenden elektrischen Maschinen zugänglich sind.

Das in der Figur dargestellte Ausführungsbeispiel dient lediglich der Erläuterung der Erfindung und ist für diese nicht beschränkend. So können beispielsweise die verwendeten Werkstoffe und Kühlmittel variieren. Die Stäbe können beispielsweise aus Aluminium oder auch aus Legierungen gebildet sein, und als Kühlmittel kommen natürlich auch andere gasförmige Kühlmittel in Frage wie z. B. Edelgase, CO₂, Stickstoff oder dergleichen.

## Patentansprüche

1. Rotierende elektrische Maschine mit einem drehfest angeordneten Ständer (1) und einem drehbar gelagerten Läufer, wobei der Ständer (1) und/oder der Läufer wenigstens eine aus Stäben (2, 3) eines elektrisch leitfähigen Werkstoffs gebildete Wicklung (7) aufweist, wobei die Stäbe (2, 3) einen Kanal (4) für ein gasförmiges Kühlmittel aufweisen und wenigstens an einem Ende der Stäbe (2, 3) jeweils eine Umlenkkappe (5) für das aus dem Kanal (4) austretende Kühlmittel vorgesehen ist,
**dadurch gekennzeichnet, dass**
jede Umlenkkappe (5) einen Temperatursensor (6) aufweist.

2. Elektrische Maschine nach Anspruch 1,
**dadurch gekennzeichnet, dass**
die Wicklung (7) mehrlagig ausgebildet ist und für jede Lage (8, 9) ein separater Temperatursensor (6) vorgesehen ist.

3. Elektrische Maschine nach Anspruch 1 oder 2,
**dadurch gekennzeichnet, dass**
ein geschlossener Kühlmittelkreislauf vorgesehen ist.

4. Elektrische Maschine nach einem der Ansprüche 1 bis 3,
**dadurch gekennzeichnet, dass**
der Temperatursensor (6) ein Thermoelement ist.

5. Elektrische Maschine nach einem der Ansprüche 1 bis 4,
**dadurch gekennzeichnet, dass**
der Temperatursensor (6) ein optischer Temperatursensor ist.
